# FASCICULE DE BREVET EUROPEEN

(11) **EP 2 813 828 B1**
(45) Date de publication et mention de la délivrance du brevet: **16.05.2018**
(21) Numéro de dépôt: 14171217.4
(22) Date de dépôt: 04.06.2014
(51) Int. Cl.: G01J 3/453

(54) **Interféromètre à transformation de Fourier et compensation d'auto-apodisation**
Interferometer mit Fourier-Umwandlung und Kompensierung der Selbst-Apodisation
Interferometer with Fourier transform and auto-apodisation compensation

(30) Priorité: 13.06.2013 FR 1301365
(43) Date de publication de la demande: 17.12.2014
(73) Titulaire: Airbus Defence and Space SAS, 78130 Les Mureaux (FR); Centre National d'Etudes Spatiales (C.N.E.S.), 75001 Paris (FR)
(72) Inventeur: Pasternak, Frédéric, 31590 Gaure (FR)
(74) Mandataire: Cabinet Plasseraud

(56) Documents cités:
- US-A- 4 585 345
- QINGHUA YANG ET AL: "Principle and analysis of the moving-optical-wedge interferometer", APPLIED OPTICS, OPTICAL SOCIETY OF AMERICA, WASHINGTON, DC; US, vol. 47, no. 13, 1 mai 2008 (2008-05-01), pages 2186-2191, XP001514460, ISSN: 0003-6935, DOI: 10.1364/AO.47.002186
- TAREK A AL-SAEED AND DIAA A KHALIL: "Spot size effects in miniaturized moving-optical-wedge interferometer", APPLIED OPTICS, OPTICAL SOCIETY OF AMERICA, WASHINGTON, DC; US, vol. 50, no. 17, 10 juin 2011 (2011-06-10) , pages 2671-2678, XP001563569, ISSN: 0003-6935, DOI: 10.1364/AO.50.002671 [extrait le 2011-06-07]
- Peter Griffiths, James de Haseth: "Fourier Transform infrared spectrometry", 31 décembre 2007 (2007-12-31), Wiley, XP002717554, pages 123-124, * page 123 - page 124 *

## Description

La présente invention concerne un interféromètre à transformation de Fourier et compensation d'auto-apodisation.

L'utilisation d'un interféromètre pour caractériser une distribution spectrale d'un rayonnement est courante. L'interféromètre produit un état d'interférence entre deux faisceaux secondaires qui sont issus d'un même faisceau initial du rayonnement, et qui suivent des chemins optiques intermédiaires distincts. Une différence de longueur entre les chemins optiques est variée, qui provoque à son tour une variation de l'intensité d'un faisceau de sortie formé en superposant les deux faisceaux secondaires. La distribution spectrale du rayonnement est obtenue à partir d'une transformation de Fourier de l'intensité du faisceau de sortie, par rapport à un paramètre représentatif de la différence de longueur entre les chemins optiques.

Il est alors connu qu'un intervalle d'excursion limité pour la différence de longueur des chemins optiques génère un profil de convolution dans la distribution spectrale qui résulte de la transformation de Fourier. En particulier, ce profil de convolution peut présenter des maxima secondaires de chaque côté du maximum principal.

Il est aussi connu que la différence de longueur entre les chemins optiques des deux voies de l'interféromètre dépend de la valeur d'angle d'incidence du rayonnement. Pour cette raison, une ouverture angulaire qui n'est pas nulle pour les faisceaux de rayonnement qui se propagent dans l'interféromètre, produit à chaque instant plusieurs états d'interférence qui correspondent chacun à une valeur distincte de la différence de longueur des chemins optiques. Il en résulte une modification du profil de convolution dans la distribution spectrale qui résulte de la transformation de Fourier, connue sous le vocable d'auto-apodisation.

Comme indiqué dans l'article intitulé «Communications à la Société Française de Physique», de P. Connes et al, Journal de Physique, tome 24, Février 1963, pages 134-138, l'interféromètre de Mertz permet de compenser cette auto-apodisation. Pour cela, un élément dont l'épaisseur optique est variable est introduit dans l'un au moins des deux chemins optiques de l'interféromètre, et son épaisseur optique est variée en même temps que la différence de longueur entre les deux chemins optiques est aussi variée. Lorsque les deux variations sont convenablement ajustées l'une par rapport à l'autre, l'auto-apodisation d'un interférogramme qui est obtenu au moyen de l'interféromètre est compensée.

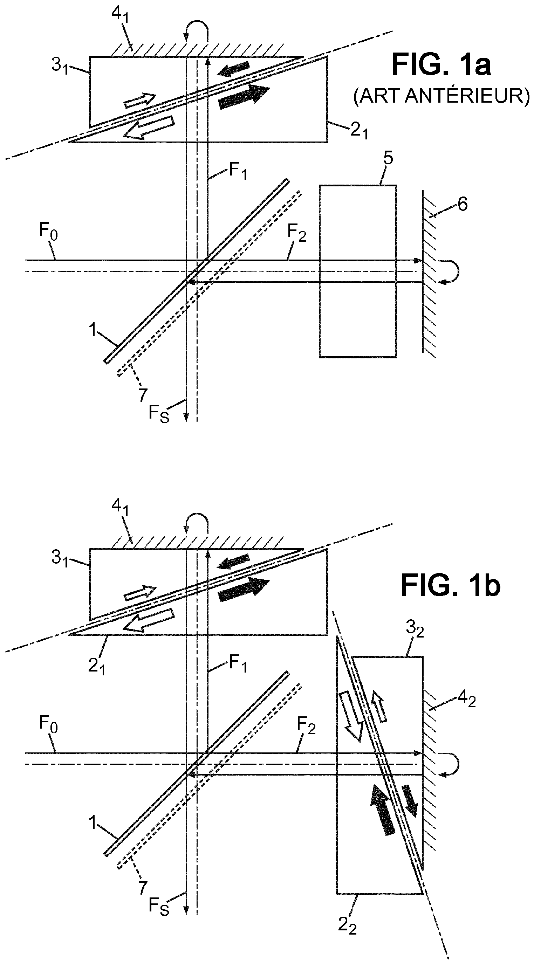

La Figure 1a est un schéma optique de principe d'un tel interféromètre à compensation d'auto-apodisation. La structure globale est celle d'un interféromètre de Michelson, avec les significations suivantes des références qui sont indiquées dans la figure :
- F₀ et F_{S}: faisceau initial et faisceau de sortie, respectivement,
- 1 et 7: lames séparatrice et compensatrice, respectivement,
- F₁ et F₂: faisceaux secondaires,
- 2₁ et 3₁: prismes disposés en sens inverses, ayant de préférence des angles au sommet qui sont égaux et pouvant être constitués d'un même matériau transparent,
- 4₁: face externe du prisme 3₁, à surface qui est réfléchissante pour le rayonnement,
- 6: miroir plan, et
- 5: ensemble de compensation, pouvant être une lame transparente à faces parallèles.

Au moins l'un des deux prismes 2₁ et 3₁ est mobile pour constituer avec l'autre prisme l'élément optique à épaisseur variable. En particulier, les deux prismes 2₁ et 3₁ peuvent être déplacés simultanément en sens inverses selon l'un ou l'autre des couples de flèches noires ou blanches qui sont indiquées sur la figure, une flèche qui est indiquée sur l'un des prismes concernant ce prisme. La compensation de l'auto-apodisation est obtenue au voisinage de l'axe optique lorsque la relation suivante est satisfaite pour chaque position des prismes 2₁ et 3₁ : D = e·(n-1)/n, où D est la différence de longueur géométrique entre les deux chemins optiques, mesurée sur l'axe de l'interféromètre, e est la différence d'épaisseur entre l'ensemble de compensation 5 et l'élément optique qui est formé par les deux prismes 2₁ et 3₁, aussi mesurée sur l'axe de l'interféromètre, et n est l'indice de réfraction des prismes 2₁ et 3₁ et de la lame qui forme l'ensemble de compensation 5, dans le cas où ces trois composants sont constitués du même matériau transparent.

D'autres exemples de l'état de la technique sont décrits dans les documents "Principle and analysis of the moving-optical-wedge interferometer", de Q. Yang et al., Applied Optics, Vol. 47, No. 13, 01.05.2008; "Spot size effects in miniaturized moving-optical-wedge interferometer" de T. A. Al-Saeed et al., Applied Optics, Vol. 50, No. 17, 10.06.2011; le document de brevet US4585345; et les pages 123-124 du livre "Fourier Transform infrared spectrometry" de Peter Griffiths et James de Haseth (Wiley).

Or de nombreuses applications requièrent de caractériser la distribution spectrale d'un rayonnement dans des conditions opératoires particulières. Tel est le cas, notamment, pour analyser depuis un satellite un rayonnement qui est issu de la surface de la Terre. L'interféromètre doit alors être robuste, avoir un poids et des dimensions qui sont réduites, et son fonctionnement doit être fiable et précis.

Un but de la présente invention consiste alors à proposer un interféromètre à transformation de Fourier et compensation d'auto-apodisation, qui satisfasse ces exigences.

Pour atteindre ce but ou d'autres, la présente invention propose un interféromètre qui comprend :
- une lame séparatrice, qui est adaptée pour séparer un faisceau initial de rayonnement en deux faisceaux secondaires ;
- deux voies optiques, qui sont munies de surfaces réfléchissantes pour les faisceaux secondaires, chaque voie étant dédiée à l'un des faisceaux secondaires et étant en forme d'aller-retour entre la lame séparatrice et la surface réfléchissante de cette voie, les surfaces réfléchissantes étant orientées pour superposer à partir de la lame séparatrice les deux faisceaux secondaires issus des voies respectives en un faisceau de sortie ;
- dans une première des voies optiques : un système à épaisseur variable comprenant deux prismes mobiles dits respectivement interne et externe, le prisme externe ayant une face externe qui constitue la surface réfléchissante de la première voie optique ;
- dans une seconde des voies optiques : un miroir qui constitue la surface réfléchissante de la seconde voie optique, et un ensemble de compensation qui est adapté pour que des épaisseurs optiques respectives de l'ensemble de compensation et du système à épaisseur variable de la première voie optique soient égales lorsqu'une différence de longueur de chemin optique est nulle entre les deux voies optiques ;
- un système mobile qui est adapté pour déplacer les prismes interne et externe selon des directions opposées et parallèles à des faces en regard des prismes, de façon à modifier simultanément une longueur de chemin optique de la première voie optique et l'épaisseur du système à épaisseur variable ;
- une voie optique de sortie, qui comprend un détecteur disposé pour recevoir le faisceau de sortie, et produire un signal représentatif de l'intensité de ce faisceau de sortie ; et
- une unité de calcul, qui est adaptée pour calculer une transformation de Fourier du signal produit par le détecteur, en fonction d'un paramètre représentatif de la différence de longueur du chemin optique entre les deux voies.

L'interféromètre de l'invention est caractérisé en ce que le système mobile possède un seul degré de liberté de mouvement et comprend lui-même :
- au moins une paire de leviers de longueurs identiques au sein d'une même paire, qui sont articulés en rotation autour de points respectifs fixes par rapport à la lame séparatrice, les leviers d'une même paire étant articulés selon des axes respectifs principaux qui sont parallèles, au moyen de liaisons rotatives chacune à un seul axe ; et
- deux branches supports portées chacune par les deux leviers d'une même paire au moyen de liaisons rotatives supplémentaires chacune à un seul axe parallèle aux axes principaux de la paire de leviers ; et
- un système d'actionnement, adapté pour provoquer une rotation des leviers si bien que chaque branche support se déplace en restant parallèle à elle-même lorsque le système d'actionnement est activé.

Les prismes interne et externe sont respectivement portés par les deux branches supports, et un rapport entre des longueurs de déplacement respectives des prismes interne et externe est constant et fixé par des distances entre les points fixes et les liaisons rotatives supplémentaires. De cette façon, le système mobile produit simultanément une variation de la différence de longueur de chemin optique entre les deux voies optiques et une compensation d'auto-apodisation pour un interférogramme qui résulte du signal produit par le détecteur lorsque le système d'actionnement est activé.

Ainsi, un interféromètre selon l'invention est du type interféromètre de Mertz. L'une des améliorations réside dans le mécanisme unique, à un seul degré de liberté, qui produit simultanément les déplacements des deux prismes. La synchronisation entre ces déplacements est ainsi assurée automatiquement. En outre, les amplitudes des déplacements sont déterminées par des longueurs fixes d'éléments mécaniques, si bien que ces amplitudes restent définitivement ajustées. L'interféromètre de l'invention possède donc un fonctionnement qui est à la fois simple et robuste, tout en produisant une compensation de l'auto-apodisation.

Dans des réalisations simples de l'invention, le miroir de la seconde voie optique peut être constitué par un traitement réfléchissant d'une face externe de l'ensemble de compensation.

Par ailleurs, pour réduire des incertitudes qui seraient causées par des jeux mécaniques, chaque liaison rotative peut être constituée par un pivot flexible. L'interférogramme qui est obtenu est alors plus précis et plus reproductible par rapport aux déplacements du système mobile.

Des premiers modes de réalisation de l'invention peuvent n'utiliser qu'une paire de leviers unique. Dans ce cas, les deux branches supports peuvent être portées par ces deux leviers de sorte qu'elles forment avec ces derniers un parallélogramme déformable. En outre, pour chaque levier, le point fixe autour duquel il est articulé en rotation peut être situé entre les deux liaisons rotatives supplémentaires qui portent respectivement les deux branches supports pour ce levier. Un tel mécanisme, qui est basé sur un parallélogramme déformable, est particulièrement robuste.

Des seconds modes de réalisation de l'invention peuvent utiliser deux paires de leviers distinctes. Un autre mécanisme peut alors être mis en oeuvre pour le système mobile, selon lequel chaque branche support est portée par les leviers d'une paire qui est différente de celle des leviers qui portent l'autre branche support. Dans ce cas, le système d'actionnement est connecté à l'un des leviers de chaque paire de façon à provoquer des déplacements qui sont parallèles mais en sens opposés à chaque instant, pour les deux branches supports.

Dans des réalisations préférées de l'invention, les deux voies optiques peuvent avoir des structures similaires. Pour cela, l'ensemble de compensation de la seconde voie optique peut comprendre lui-même un prisme interne et un prisme externe, supplémentaires par rapport aux prismes interne et externe de la première voie optique, avec des faces respectives en regard qui sont parallèles entre les prismes interne et externe de la seconde voie optique. Le miroir peut alors être porté par une face externe du prisme externe de la seconde voie optique, par exemple sous forme d'une couche réfléchissante sur cette face externe. En outre, les prismes interne et externe de la seconde voie optique sont aussi connectés au système mobile, mais de sorte que la longueur du chemin optique de l'une des voies optiques augmente en même temps que la longueur du chemin optique de l'autre voie optique diminue, lorsque le système d'actionnement est activé. De cette façon, les deux voies optiques participent cumulativement aux variations de la différence de longueur de chemin optique, si bien que ces variations peuvent avoir des amplitudes supérieures. Un rayonnement monochromatique est alors rendu avec une largeur spectrale apparente qui est plus petite, telle que résultant de la transformation de Fourier. Autrement dit, le profil de convolution dans la distribution spectrale qui résulte de la transformation de Fourier, est plus fin pour toute composante monochromatique du rayonnement.

Avantageusement, les prismes externes respectifs des deux voies optiques peuvent être fixés ensemble sur une même des deux banches supports, et les prismes internes respectifs des deux voies optiques peuvent être fixés ensemble sur l'autre des deux banches supports. Le même mécanisme produit ainsi à la fois le rallongement du chemin optique de l'une des deux voies, et la diminution du chemin optique de l'autre voie. L'amplitude maximale de la variation de la différence de longueur entre les deux voies optiques est ainsi augmentée, tout en ne conservant qu'un système mobile unique à seul degré de liberté de mouvement. Dans ce cas, les deux voies optiques de l'interféromètre peuvent être antisymétriques l'une par rapport à l'autre pour des orientations respectives des prismes externes d'une part, et pour des orientations respectives des prismes internes d'autre part.

De façon générale, dans chaque voie optique, les prismes interne et externe peuvent avoir des angles au sommet qui sont identiques, et être constitués d'un même matériau transparent. Eventuellement, l'angle au sommet peut être identique pour les quatre prismes, ainsi que leur matériau constitutif.

Comme un interféromètre selon l'invention peut être particulièrement adapté pour fonctionner dans un environnement spatial, l'invention propose aussi un procédé d'analyse spectrale d'un rayonnement provenant d'une portion de surface de la Terre. Le procédé comprend les étapes suivantes :
- installer au moins une partie optique et mécanique d'un interféromètre tel que décrit précédemment à bord d'un satellite ;
- mettre le satellite en orbite autour de la Terre ;
- orienter le satellite de sorte qu'une partie du rayonnement constitue le faisceau initial ;
- pendant que la partie du rayonnement se propage dans les deux voies optiques de l'interféromètre, activer simultanément le détecteur et le système d'actionnement ; et
- calculer la transformation de Fourier du signal produit par le détecteur, en fonction du paramètre représentatif de la différence de longueur du chemin optique entre les deux voies, pour obtenir une caractéristique de distribution spectrale du rayonnement.

Eventuellement, l'unité de calcul de l'interféromètre peut être située sur Terre. Les signaux qui sont produits par le détecteur pour des valeurs variables de la différence de longueur du chemin optique entre les deux voies, sont alors transcrits dans un format de transmission puis transmis à partir du satellite à l'unité de calcul.

D'autres particularités et avantages de la présente invention apparaîtront dans la description ci-après d'exemples de réalisation non limitatifs, en référence aux dessins annexés, dans lesquels :
- la Figure 1a est un schéma du principe optique tel que connu avant la présente invention, pour un interféromètre à transformation de Fourier et à compensation d'auto-apodisation ;
- la Figure 1b est un autre schéma de principe optique pour un interféromètre à transformation de Fourier et à compensation d'auto-apodisation, auquel l'invention peut aussi être appliquée ;
- les Figures 2a et 2b sont des schémas cinématiques de systèmes mobiles pouvant être utilisés respectivement pour les interféromètres des Figures 1a et 1b ;
- la Figure 3 est une vue en perspective de composants optiques d'un interféromètre conforme à la Figure 1b ;
- la Figure 4 est une vue générale en perspective de l'interféromètre des Figures 1b, 2b et 3 ; et
- la Figure 5 correspond à la Figure 2a pour encore un autre mode de réalisation de l'invention.

Pour raison de clarté, les dimensions des éléments qui sont représentés dans ces figures ne correspondent pas nécessairement à des dimensions réelles ni à des rapports de dimensions réels. En outre, des références identiques qui sont indiquées dans des figures différentes désignent des éléments identiques ou qui ont des fonctions identiques.

La Figure 1a a déjà été décrite en tant qu'art antérieur disponible avant la présente invention. Les prismes 2₁ et 3₁ sont appelés respectivement prisme interne et prisme externe pour la première voie optique de l'interféromètre, le prisme interne étant le plus proche de la lame séparatrice 1 et le prisme externe portant la surface 4₁ qui est réfléchissante pour le rayonnement du faisceau F₁. Les prismes 2₁ et 3₁ peuvent être mobiles simultanément en sens inverse l'un par rapport à l'autre, parallèlement à une direction de déplacement commune et parallèlement à leurs faces respectives qui sont en regard, pour former ensemble une lame à faces parallèles d'épaisseur variable. Leurs angles au sommet peuvent être identiques, et ils peuvent être constitués du même matériau à la fois réfringent et transparent. Par ailleurs, les longueurs respectives des prismes 2₁ et 3₁ selon leur direction de déplacement peuvent être adaptées en fonction de leurs excursions de déplacement respectives. Une telle réalisation de la compensation d'auto-apodisation est connue de l'Homme du métier.

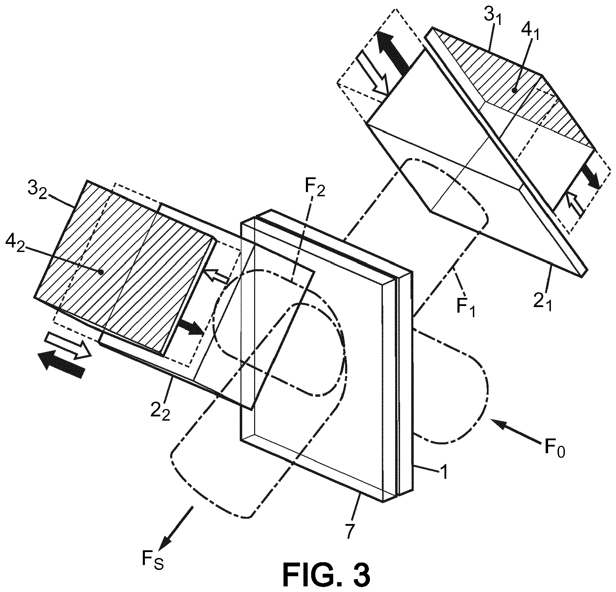

Les Figures 1b et 3 correspondent à un perfectionnement du principe optique de la Figure 1a. Les deux voies optiques de l'interféromètre sont pourvues de prismes internes et externes. Les prismes interne et externe de la seconde voie optique sont référencés respectivement 2₂ et 3₂. En outre, la face externe 4₂ du prisme 3₂ peut être réfléchissante, de façon à réfléchir le faisceau secondaire F₂ en direction de la lame séparatrice 1, en remplacement du miroir 6. De préférence, les prismes 2₂ et 3₂ de la seconde voie optique de l'interféromètre peuvent être identiques respectivement aux prismes 2₁ et 3₁ de sa première voie optique. Les quatre prismes sont déplacés simultanément de façon à ce que la longueur du chemin optique de l'une des voies optiques augmente lorsque celle de l'autre voie optique diminue, tout en satisfaisant la relation de compensation d'auto-apodisation. Ainsi les quatre prismes se déplacent simultanément selon les flèches noires qui sont indiquées sur les Figures 1b et 3, ou bien selon les flèches blanches, chaque flèche épaisse (respectivement mince) se rapportant au prisme interne (resp. externe) sur lequel ou près duquel elle est indiquée. De cette façon, la lame à faces parallèles qui est constituée par les prismes 2₁ et 3₁ de la première voie optique, augmente en épaisseur en même temps que l'épaisseur de la lame à faces parallèles qui est constituée par les prismes 2₂ et 3₂ de la seconde voie optique diminue, et vice versa.

Une voie optique de sortie de l'interféromètre, entre la lame séparatrice 1 et un détecteur (non représenté) de l'intensité du faisceau de sortie F_{S}, peut avoir l'une des structures connues de l'Homme du métier. En particulier, une telle voie de sortie peut comprendre des composants optiques d'adaptation de la section et/ou de la convergence du faisceau F_{S}, entre la lame séparatrice 1 et le détecteur. De même, une unité de calcul qui est adaptée pour calculer une transformation de Fourier de l'interférogramme qui est produit par le détecteur lors du déplacement des prismes, n'est pas représentée mais est connue en soi.

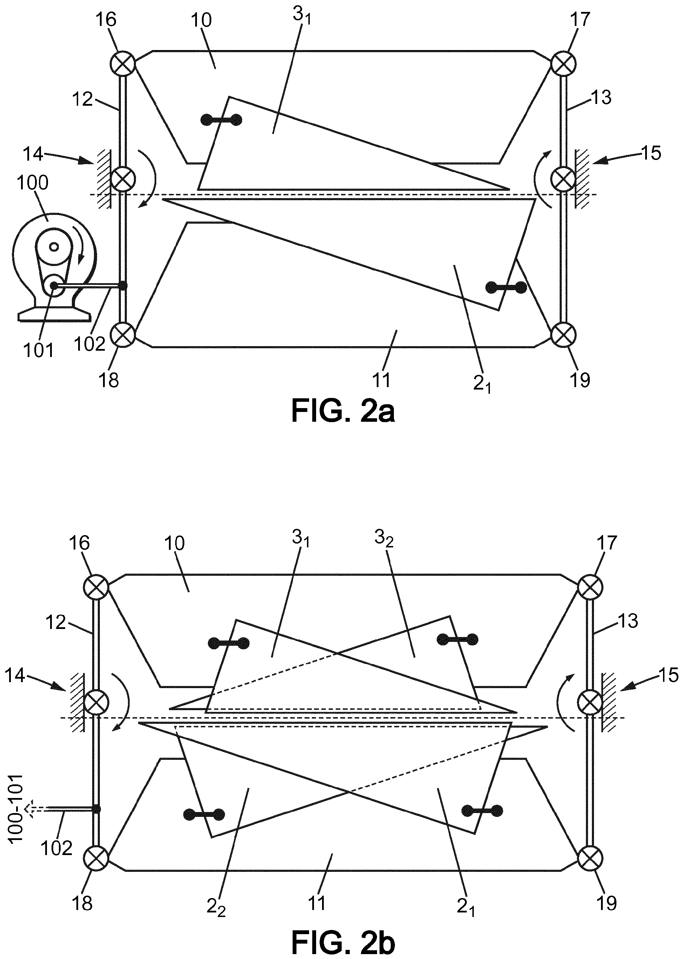

L'une des caractéristiques principales de l'invention concerne le système de support et de déplacement des prismes, pour les déplacer de la façon qui vient d'être décrite. En ce sens, l'invention peut être appliquée à un interféromètre qui est conforme à la Figure 1a aussi bien que la Figure 1b. Elle est décrite d'abord pour un interféromètre dont la structure optique est conforme à la Figure 1a, en référence à la Figure 2a, puis sera étendue à la structure optique d'interféromètre de la Figure 1b, en référence à la figure 2b.

La Figure 2a est un schéma cinématique du système mobile de support et de déplacement des prismes 2₁ et 3₁. Les références suivantes ont les significations suivantes :
- 14 et 15: deux points de support qui sont fixes par rapport aux lames séparatrice 1 et compensatrice 7,
- 12 et 13: deux leviers qui sont articulés en rotation autour des points fixes 14 et 15, respectivement,
- 10 et 11: deux branches supports, de même longueur, sur lesquelles sont fixés respectivement les prismes interne 2₁ et externe 3₁,
- 16 à 19: des liaisons rotatives qui relient chacune l'une des deux branches supports 10 et 11 à l'un des deux leviers 12 et 13,
- 100, 101: un moteur rotatif et une came montée sur un axe de sortie du moteur, et
- 102: un bras rigide qui relie la came 101 au levier 12, en un point du levier 12 qui est situé à une distance non nulle du point fixe 14.

Le long du levier 12, le point fixe 14 est intermédiaire entre les liaisons rotatives 16 et 18. De même, le point fixe 15 est situé entre les liaisons rotatives 17 et 19 le long du levier 13.

Les deux branches supports 10 et 11 et les deux leviers 12 et 13 forment ensemble un cadre déformable en parallélogramme variable. Pour cela, les longueurs des deux leviers 12 et 13, respectivement entre le point fixe 14 et la liaison rotative 16 pour le levier 12, et entre le point fixe 15 et la liaison rotative 17 pour le levier 13, sont identiques. De même, la longueur du levier 12 entre le point fixe 14 et la liaison rotative 18, et celle du levier 13 entre le point fixe 15 et la liaison rotative 19, sont aussi identiques tout en étant différentes des longueurs précédentes dans la plupart des modes de réalisation. En outre, les longueurs des branches supports 10 et 11 sont égales, lorsqu'elles sont mesurées entre les liaisons rotatives 16 et 17 pour la branche support 10, et entre les liaisons rotatives 18 et 19 pour la branche support 11. Toutes les liaisons rotatives sont à un seul axe, et parallèles entre elles pour permettre la déformation du parallélogramme.

Les prismes 2₁ et 3₁ sont fixés respectivement sur les branches support 11 et 10 de façon que la direction de déplacement de chaque prisme soit parallèle à celle de ses faces qui est en vis-à-vis avec l'autre prisme au sein de la voie optique. Cette direction de déplacement est perpendiculaire à la direction commune de tous les axes des liaisons rotatives.

Les leviers 12 et 13 avec les branches supports 10 et 11 forment ensemble le système mobile de déplacement des prismes 2₁ et 3₁. Le moteur 100, la came 101 et le bras 102 forment le système d'actionnement de ce système mobile.

Le schéma de la Figure 2b reprend celui de la Figure 2a, en fixant le prisme interne 2₂ de la seconde voie optique sur la même branche support 11 que celle qui porte le prisme interne 2₁ de la première voie optique. Simultanément, le prisme externe 3₂ est fixé sur l'autre branche support, référencée 10, avec le prisme externe 3₁. De plus, les deux prismes qui sont portés par chaque branche support peuvent être orientés en sens inverse l'un par rapport à l'autre.

Dans deux modes particuliers de réalisation de l'invention qui correspondent respectivement aux Figures 2a et 2b, les longueurs suivantes ont les valeurs qui sont indiquées maintenant :
longueur totale de chaque levier 12 ou 13 : 130 mm (millimètre), entre les liaisons rotatives 16 et 18 pour le levier 12, et entre les liaisons rotatives 17 et 19 pour le levier 13 ,
longueur du levier 12 entre le point fixe 14 et la liaison rotative 16 : 50 mm,
longueur du levier 12 entre le point fixe 14 et la liaison rotative 18 : 76 mm,
angle au sommet des quatre prismes 2₁, 3₁, 2₂, et 3₂ : 13° (degré),
angle de tilt des prismes, entre la direction de déplacement des branches supports 10, 11 et une direction qui est perpendiculaire à l'arête de chaque prisme et qui est contenue dans les faces des prismes qui sont en vis-à-vis : 9°, et
indice de réfraction des quatre prismes 2₁, 3₁, 2₂, et 3₂ : 2,4 lorsque ces prismes sont en séléniure de zinc (ZnSe), par exemple pour une utilisation de l'invention sur un intervalle spectral du rayonnement pour lequel la longueur d'onde est comprise entre 3 µm (micromètre) et 15 µm.

L'auto-apodisation de l'interféromètre est compensée pour ces valeurs numériques en particulier.

Les banches supports 10 et 11 peuvent avoir chacune une longueur de 360 mm entre les liaisons rotatives correspondantes, bien que cette valeur n'ait pas d'importance par rapport au déplacement des prismes.

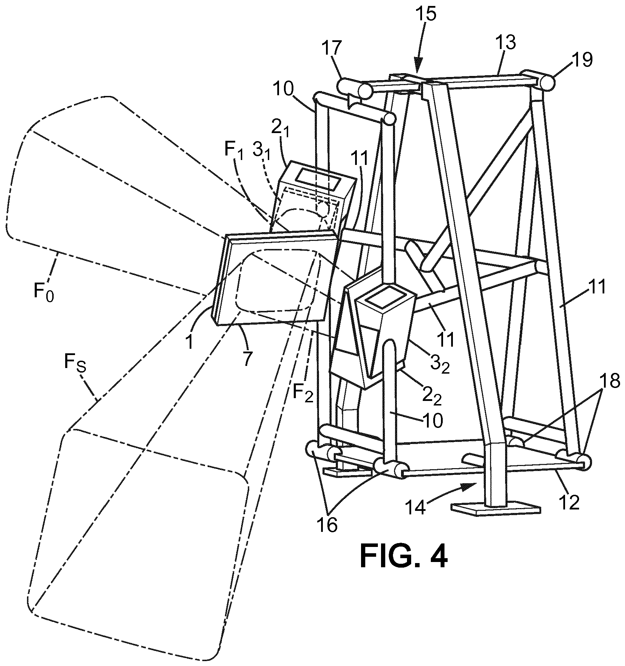

La Figure 4 montre une réalisation particulière de l'invention, qui correspond aux Figures 1b, 2b et 3. Pour améliorer la stabilité du parallélogramme déformable qui est constitué par les branches supports 10 et 11 avec les leviers 12 et 13, les liaisons rotatives 16 et 18 peuvent être dupliquées le long de leurs axes respectifs, de même que la liaison rotative du point fixe 14. L'écart entre chacune de ces paires de liaisons rotatives peut être 445 mm, par exemple. Toutes les liaisons rotatives peuvent être constituées par des pivots flexibles qui sont disponibles commercialement, par exemple des pivots à lames.

La position de l'un des leviers 12 et 13 par rapport à sa rotation autour du point fixe 14 ou 15 correspondant, peut être repérée à l'aide d'un capteur optique de position en rotation. Un tel capteur est connu. La position du système mobile qui est ainsi détectée en temps réel permet de déterminer la valeur de la différence de longueur du chemin optique entre les deux voies optiques de l'interféromètre, à chaque instant du fonctionnement du moteur 100 et en relation avec la valeur d'intensité qui est détectée au même instant pour le faisceau de sortie F_{S}. Ces valeurs sont alors les données d'entrée pour le calcul de la transformation de Fourier, afin d'obtenir la caractéristique de la distribution spectrale du rayonnement dans le faisceau initial F₀.

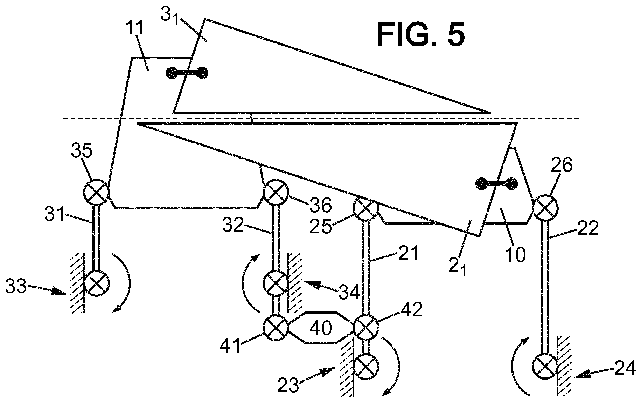

La Figure 5 est un schéma cinématique d'un autre mode de réalisation de l'invention, pour un interféromètre dont la structure optique est de nouveau conforme à la Figure 1a. Les références qui sont indiquées dans la Figure 5 ont les significations suivantes :
21, 22, 31, 32 leviers,
23, 24, 33, 34 points fixes par rapport aux lames 1 et 7, pourvus de liaisons rotatives connectées aux leviers correspondants,
25, 26, 35, 36 liaisons rotatives entre les leviers correspondants et l'une des branches supports 10 ou 11, et
40, 41, 42 système d'actionnement et liaisons rotatives entre ce système d'actionnement et les leviers 21 et 32, respectivement.

L'Homme du métier comprendra par lui-même le fonctionnement cinématique qui est indiqué par le schéma de la Figure 5. On ajoute seulement que le levier 31 possède une longueur entre le point fixe 33 et la liaison rotative 35 qui est identique à celle du levier 32 entre le point fixe 34 et la liaison rotative 36. De même, le levier 21 possède une longueur entre le point fixe 23 et la liaison rotative 25 qui est identique à celle du levier 22 entre le point fixe 24 et la liaison rotative 26. Ainsi les deux prismes 2₁ et 3₁ sont déplacés avec leurs faces en vis-à-vis qui restent encore constamment parallèles à elles-mêmes. En outre le système d'actionnement 40 peut avoir une structure analogue à celui de la Figure 2a, mais avec deux bras rigides qui relient respectivement la came aux leviers 21 et 32.

Le schéma de la Figure 5 pourra être adapté sans difficulté à la structure optique d'interféromètre de la Figure 1b, en reproduisant la façon qui a été décrite plus haut pour déduire le schéma cinématique de la Figure 2b à partir de celui de la Figure 2a.

Enfin, tous les interféromètres qui ont été décrits ci-dessus sont particulièrement adaptés pour être embarqués à bord de satellites artificiels, notamment du fait de la simplicité et de la robustesse de leurs systèmes de support et de déplacement des prismes.

## Revendications

1. Interféromètre comprenant :
- une lame séparatrice (1) adaptée pour séparer un faisceau initial (F₀) de rayonnement en deux faisceaux secondaires (F₁, F₂) ;
- deux voies optiques munies de surfaces réfléchissantes (4₁, 6) pour les faisceaux secondaires, chaque voie étant dédiée à l'un des faisceaux secondaires (F₁, F₂) et étant en forme d'aller-retour entre la lame séparatrice (1) et la surface réfléchissante de ladite voie, les surfaces réfléchissantes étant orientées pour superposer à partir de la lame séparatrice les deux faisceaux secondaires issus des voies respectives en un faisceau de sortie (F_{S}) ;
- dans une première des voies optiques : un système à épaisseur variable comprenant deux prismes mobiles dits respectivement interne (2₁) et externe (3₁), le prisme externe ayant une face externe (4₁) constituant la surface réfléchissante de la première voie optique ;
- dans une seconde des voies optiques : un miroir (6) qui constitue la surface réfléchissante de ladite seconde voie optique, et un ensemble de compensation (5) adapté pour que des épaisseurs optiques respectives dudit ensemble de compensation et du système à épaisseur variable de la première voie optique soient égales lorsqu'une différence de longueur de chemin optique est nulle entre les deux voies optiques ;
- un système mobile adapté pour déplacer les prismes interne (2₁) et externe (3₁) selon des directions opposées et parallèles à des faces en regard des prismes, de façon à modifier simultanément une longueur de chemin optique de la première voie optique et l'épaisseur du système à épaisseur variable ;
- une voie optique de sortie comprenant un détecteur disposé pour recevoir le faisceau de sortie (F_{S}), et produire un signal représentatif d'une intensité dudit faisceau de sortie ; et
- une unité de calcul, adaptée pour calculer une transformation de Fourier du signal produit par le détecteur, en fonction d'un paramètre représentatif de la différence de longueur du chemin optique entre les deux voies ;
**caractérisé en ce que** le système mobile possède un seul degré de liberté de mouvement et comprend lui-même :
- au moins une paire de leviers (12, 13 ; 21, 22, 31, 32) de longueurs identiques au sein d'une même paire, articulés en rotation autour de points respectifs (14, 15 ; 23, 24, 33, 34) fixes par rapport à la lame séparatrice (1), les leviers d'une même paire étant articulés selon des axes respectifs principaux qui sont parallèles, au moyen de liaisons rotatives chacune à un seul axe ; et
- deux branches supports (10, 11) portées chacune par les deux leviers d'une même paire au moyen de liaisons rotatives supplémentaires (16, 17, 18, 19 ; 25, 26, 35, 36) chacune à un seul axe parallèle aux axes principaux de ladite paire de leviers ; et
- un système d'actionnement (100-102 ; 40-42), adapté pour provoquer une rotation des leviers (12, 13 ; 21, 22, 31, 32) si bien que chaque branche support (10, 11) se déplace en restant parallèle à elle-même lorsque le système d'actionnement est activé ;
les prismes interne (2) et externe (3) sont respectivement portés par les deux branches supports (10, 11) ; et
un rapport entre des longueurs de déplacement respectives des prismes interne (2) et externe (3) est constant et fixé par des distances entre les points fixes (14, 15 ; 23, 24, 33, 34) et les liaisons rotatives supplémentaires (16, 17, 18, 19; 25, 26, 35, 36), de sorte que le système mobile produise simultanément une variation de la différence de longueur de chemin optique entre les deux voies optiques et une compensation d'auto-apodisation d'un interférogramme résultant du signal produit par le détecteur lorsque le système d'actionnement est activé.

2. Interféromètre selon la revendication 1, dans lequel le miroir (6) de la seconde voie optique est constitué par un traitement réfléchissant (4₂) d'une face externe de l'ensemble de compensation (5).

3. Interféromètre selon la revendication 1 ou 2, dans lequel les deux branches supports (10, 11) sont portées par les deux leviers (12, 13) d'une paire unique, de sorte que les dites deux branches supports forment avec les dits deux leviers un parallélogramme déformable ; et
pour chaque levier (12, 13), le point fixe (14, 15) autour duquel ledit levier est articulé en rotation est situé entre les deux liaisons rotatives supplémentaires (16-19) qui portent respectivement les deux branches supports pour ledit levier.

4. Interféromètre selon la revendication 1 ou 2, dans lequel chaque branche support (10) est portée par les leviers d'une paire différente (21, 22) de la paire des leviers (31, 32) qui portent l'autre branche support (11) ;
et le système d'actionnement (40-42) est connecté à l'un des leviers (21, 32) de chaque paire de façon à provoquer des déplacements qui sont parallèles mais en sens opposés à un même instant, pour les deux branches supports (10, 11).

5. Interféromètre selon l'une quelconque des revendications précédentes dans lequel, dans la seconde voie optique, l'ensemble de compensation (5) comprend lui-même un prisme interne (2₂) et un prisme externe (3₂), supplémentaires par rapport aux prismes interne (2₁) et externe (3₁) de la première voie optique, avec des faces respectives en regard qui sont parallèles entre les prismes interne et externe de la seconde voie optique, et le miroir (6) est porté par une face externe (4₂) du prisme externe de ladite seconde voie optique ; et
les prismes interne (2₂) et externe (3₂) de la seconde voie optique sont connectés au système mobile de sorte que la longueur du chemin optique de l'une des voies optiques augmente en même temps que la longueur du chemin optique de l'autre voie optique diminue, lorsque le système d'actionnement (100-102 ; 40-42) est activé.

6. Interféromètre selon la revendication 5, dans lequel les prismes externes (3₁, 3₂) respectifs des deux voies optiques sont fixés ensemble sur une même (10) des deux banches supports, et les prismes internes (2₁, 2₂) respectifs des deux voies optiques sont fixés ensemble sur l'autre (11) des deux banches supports.

7. Interféromètre selon la revendication 6, dans lequel les deux voies optiques sont antisymétriques l'une par rapport à l'autre pour des orientations respectives des prismes externes (3₁, 3₂) d'une part, et pour des orientations respectives des prismes internes (2₁, 2₂) d'autre part.

8. Interféromètre selon l'une quelconque des revendications précédentes dans lequel, dans chaque voie optique, les prismes interne (2₁, 2₂) et externe (3₁, 3₂) ont des angles au sommet qui sont identiques, et sont constitués d'un même matériau transparent.

9. Interféromètre selon l'une quelconque des revendications précédentes, dans lequel chaque liaison rotative est constituée par un pivot flexible.

10. Procédé d'analyse spectrale d'un rayonnement provenant d'une portion de surface de la Terre, comprenant les étapes suivantes :
- installer au moins une partie optique et mécanique d'un interféromètre selon l'une quelconque des revendications précédentes à bord d'un satellite ;
- mettre le satellite en orbite autour de la Terre ;
- orienter le satellite de sorte qu'une partie du rayonnement constitue le faisceau initial (F₀) ;
- pendant que la partie du rayonnement se propage dans les deux voies optiques de l'interféromètre, activer simultanément le détecteur et le système d'actionnement (100-102 ; 40-42) ; et
- calculer la transformation de Fourier du signal produit par le détecteur, en fonction du paramètre représentatif de la différence de longueur du chemin optique entre les deux voies, pour obtenir une caractéristique de distribution spectrale du rayonnement.

11. Procédé selon la revendication 10, dans lequel l'unité de calcul de l'interféromètre est située sur Terre, et les signaux produits par le détecteur pour des valeurs variables de la différence de longueur du chemin optique entre les deux voies, sont transcrits dans un format de transmission puis transmis à partir du satellite à l'unité de calcul.

## Patentansprüche

1. Interferometer, umfassend:
- einen Strahlteiler (1), der dazu angepasst ist, einen Ausgangsstrahl (F₀) einer Strahlung in zwei Sekundärstrahlen (F₁, F₂) zu teilen;
- zwei mit reflektierenden Oberflächen (4₁, 6) ausgestattete optische Wege für die Sekundärstrahlen, wobei jeder Weg einem der Sekundärstrahlen (F₁, F₂) gewidmet ist und eine Hin- und Zurück-Form zwischen dem Strahlteiler (1) und der reflektierenden Oberfläche des Wegs aufweist, wobei die reflektierenden Oberflächen so ausgerichtet sind, dass sie ab dem Strahlteiler die aus den jeweiligen Wegen stammenden beiden Sekundärstrahlen zu einem Austrittsstrahl (F_{S}) überlagern;
- in einem ersten der optischen Wege: ein System von variabler Dicke, umfassend zwei als inneres (2₁) bzw. äußeres Prisma (3₁) bezeichnete Prismen, wobei das äußere Prisma eine Außenseite (4₁) aufweist, welche die reflektierende Oberfläche des ersten optischen Wegs ausbildet;
- in einem zweiten der optischen Wege: einen Spiegel (6), der die reflektierende Oberfläche des zweiten optischen Wegs ausbildet, und eine Kompensierungseinheit (5), die dazu angepasst ist, dass die jeweiligen optischen Dicken der Kompensierungseinheit und des Systems von variabler Dicke des ersten optischen Wegs gleich sind, wenn eine optische Weglängendifferenz zwischen den beiden optischen Wegen null ist;
- ein mobiles System, das dazu angepasst ist, das innere (2₁) und das äußere Prisma (3₁) in entgegengesetzte und zu gegenüberliegenden Flächen der Prismen parallele Richtungen zu bewegen, um gleichzeitig eine optische Weglänge des ersten optischen Wegs und die Dicke des Systems mit variabler Dicke zu verändern;
- wobei ein optischer Austrittsweg einen Detektor umfasst, der angeordnet ist, um den Austrittsstrahl (F_{S}) zu empfangen und ein für eine Intensität des Austrittsstrahls repräsentatives Signal zu erzeugen; und
- eine Recheneinheit, die dazu angepasst ist, eine Fouriertransformation des durch den Detektor erzeugten Signals in Abhängigkeit von einem für die optische Weglängendifferenz zwischen den beiden optischen Weglängen repräsentativen Parameter zu berechnen;
**dadurch gekennzeichnet, dass** das bewegliche System einen einzigen Bewegungsfreiheitsgrad besitzt und seinerseits Folgendes umfasst:
- zumindest ein Paar Hebel (12, 13; 21, 22, 31, 32) von identischer Länge innerhalb eines selben Paars, die um jeweilige, in Bezug auf den Strahlteiler (1) feste Punkte (14, 15; 23, 24, 33, 34) drehbar angelenkt sind, wobei die Hebel eines selben Paars gemäß jeweiliger Hauptachsen, die parallel sind, mit Hilfe von drehbaren Verbindungen mit jeweils einer einzigen Achse angelenkt sind; und
- zwei Stützschenkel (10, 11), die jeweils durch die beiden Hebel eines selben Paars mit Hilfe von zusätzlichen drehbaren Verbindungen (16, 17, 18, 19; 25, 26, 35, 36) mit jeweils einer einzigen, zu den Hauptachsen des Hebelpaars parallelen Achse getragen werden; und
- ein Betätigungssystem (100 - 102; 40 - 42), das dazu angepasst ist, eine Drehung der Hebel (12, 13; 21, 22, 31, 32) zu bewirken, sodass sich jeder Stützschenkel (10, 11) verschiebt und zugleich parallel zu sich selbst bleibt, wenn das Betätigungssystem aktiviert wird;
wobei das innere Prisma (2) und das äußere Prisma (3) jeweils durch die beiden Stützschenkel (10, 11) getragen werden; und
wobei ein Verhältnis zwischen den jeweiligen Verschiebungslängen des inneren (2) und äußeren Prismas (3) konstant und durch Abstände zwischen den festen Punkten (14, 15; 23, 24, 33, 34) und den zusätzlichen drehbaren Verbindungen (16, 17, 18, 19; 25, 26, 35, 36) festgelegt ist, sodass das mobile System gleichzeitig eine Veränderung der optischen Weglängendifferenz zwischen den beiden optischen Wegen und eine Kompensierung der Selbst-Apodisation eines Interferogramms aus dem vom Detektor erzeugten Signal erzeugt, wenn das Betätigungssystem aktiviert wird.

2. Interferometer nach Anspruch 1, wobei der Spiegel (6) des zweiten optischen Wegs durch eine reflektierende Behandlung (4₂) einer Außenseite der Kompensierungseinheit (5) ausgebildet ist.

3. Interferometer nach Anspruch 1 oder 2, wobei die beiden Stützschenkel (10, 11) durch die beiden Hebel (12, 13) eines einzigen Paars getragen werden, sodass die beiden Stützschenkel mit den beiden Hebeln ein verformbares Parallelogramm ausbilden; und
wobei sich für jeden Hebel (12, 13) der feste Punkt (14, 15), um den der Hebel drehbar angelenkt ist, zwischen den beiden zusätzlichen drehbaren Verbindungen (16 - 19), die jeweils die beiden Stützschenkel für den Hebel tragen, befindet.

4. Interferometer nach Anspruch 1 oder 2, wobei jeder Stützschenkel (10) durch die Hebel eines vom Paar der Hebel (31, 32), die den anderen Stützschenkel (11) tragen, unterschiedlichen Paars (21, 22) getragen wird;
und wobei das Betätigungssystem (40 - 42) mit einem der Hebel (21, 32) jedes Paars verbunden ist, um Verschiebungen, die parallel aber in entgegengesetzte Richtungen sind, für die beiden Stützschenkel (10, 11) zu bewirken.

5. Interferometer nach einem der vorangehenden Ansprüche, wobei im zweiten optischen Weg die Kompensierungseinheit (5) ihrerseits ein zusätzliches inneres (2₂) und äußeres Prisma (3₂) in Bezug auf das innere (2₁) und äußere Prisma (3₁) des ersten optischen Wegs mit jeweiligen gegenüberliegenden parallelen Flächen zwischen dem inneren und dem äußeren Prisma des zweiten optischen Wegs umfasst und wobei der Spiegel (6) durch eine Außenseite (4₂) des äußeren Prismas des zweiten optischen Wegs getragen wird; und
wobei das innere (2₂) und äußere Prisma (3₂) des zweiten optischen Wegs so mit dem beweglichen System verbunden sind, dass die optische Weglänge des einen der optischen Wege zur gleichen Zeit zunimmt, während die optische Weglänge des anderen optischen Wegs abnimmt, wenn das Betätigungssystem (100 - 102; 40 - 42) aktiviert wird.

6. Interferometer nach Anspruch 5, wobei die jeweiligen äußeren Prismen (3₁, 3₂) der beiden optischen Wege zusammen an einem selben (10) der beiden Stützschenkel befestigt sind und die jeweiligen inneren Prismen (2₁, 2₂) der beiden optischen Wege zusammen am anderen (11) der beiden Stützschenkel befestigt sind.

7. Interferometer nach Anspruch 6, wobei die beiden optischen Wege für jeweilige Ausrichtungen der äußeren Prismen (3₁, 3₂) einerseits und für jeweilige Ausrichtungen der inneren Prismen (2₁, 2₂) andererseits antisymmetrisch zueinander sind.

8. Interferometer nach einem der vorangehenden Ansprüche, wobei in jedem der optischen Wege die inneren (2₁, 2₂) und äußeren Prismen (3₁, 3₂) Winkel an der Spitze aufweisen, die identisch sind, und aus einem selben transparenten Material ausgebildet sind.

9. Interferometer nach einem der vorangehenden Ansprüche, wobei jede drehbare Verbindung durch ein flexibles Gelenk ausgebildet ist.

10. Verfahren zur Spektralanalyse einer aus einem Abschnitt der Erdoberfläche stammenden Strahlung, umfassend die folgenden Schritte:
- Installieren zumindest eines optischen und mechanischen Teils eines Interferometers nach einem der vorangehenden Ansprüche an Bord eines Satelliten;
- Verbringen des Satelliten in eine Umlaufbahn um die Erde;
- Ausrichten des Satelliten, sodass ein Teil der Strahlung den Ausgangsstrahl (F₀) ausbildet;
- während der Teil der Strahlung sich auf den beiden optischen Wegen des Interferometers ausbreitet: gleichzeitiges Aktivieren des Detektors und des Betätigungssystems (100 -102; 40 - 42); und
- Berechnen der Fouriertransformation des durch den Detektor erzeugten Signals in Abhängigkeit von dem für die optische Weglängendifferenz zwischen den beiden Wegen repräsentativen Parameter, um ein Spektralverteilungsmerkmal der Strahlung zu erhalten.

11. Verfahren nach Anspruch 10, wobei sich die Recheneinheit des Interferometers auf der Erde befindet und die durch den Detektor für veränderliche Werte der optischen Weglängendifferenz zwischen den beiden Wegen erzeugten Signale in ein Übertragungsformat transkribiert und anschließend vom Satelliten an die Recheneinheit übertragen werden.

## Claims

1. Interferometer comprising:
- a splitting plate (1), adapted to split an initial radiation beam (F₀) into two secondary beams (F₁, F₂);
- two optical routes provided with reflecting surfaces (4₁, 6) effective for the secondary beams, each route being dedicated for one of the secondary beams (F₁, F₂) and being in outward-return form between the splitting plate (1) and the reflecting surface of said route, the reflecting surfaces being oriented in order to superimpose from the splitting plate, the two secondary beams originating from the respective routes in an output beam (Fs);
- in a first one of the optical routes: a variable-thickness system comprising two mobile prisms called respectively internal (2₁) and external (3₁), the external prism having an external face (4₁) constituting the reflecting surface of the first optical route;
- in a second one of the optical routes: a mirror (6) constituting the reflecting surface of said second optical route, and a compensation assembly (5) adapted so that respective optical thicknesses of said compensation assembly and of the variable-thickness system of the first optical route are equal when an optical path length difference between the two optical routes is zero;
- a mobile system adapted to move the internal (2₁) and external (3₁) prisms along directions that are opposite and parallel to facing surfaces of the prisms, so as to modify simultaneously an optical path length of the first optical route and the thickness of the variable-thickness system;
- an output optical route comprising a detector arranged to receive the output beam (F_{S}), and produce a signal representing an intensity of said output beam; and
- a calculation unit, adapted to calculate a Fourier transform of the signal produced by the detector, as a function of a parameter representing the difference in length of the optical path between the two routes;
**characterized in that** the mobile system has a single degree of freedom of movement and itself comprises:
- at least one pair of levers (12, 13 ; 21, 22, 31, 32) having identical lengths within one and same pair, rotatably hinged about respective points (14, 15 ; 23, 24, 33, 34) that are fixed with respect to the splitting plate (1) along respective main axes parallel to each other within the pair of levers, by means of rotating connexions, each with one single axis; and
- two support arms (10, 11) each borne by the two levers of one and same pair by means of additional rotating connexions (16, 17, 18, 19 ; 25, 26, 35, 36), each with one single axis parallel to the main axes of said pair of levers; and
- an actuation system (100-102; 40-42), adapted to cause a rotation of the levers (12, 13; 21, 22, 31, 32) so that each support arm (10, 11) moves while remaining parallel to itself when the actuation system is activated;
the internal (2) and external (3) prisms are respectively borne by the two support arms (10, 11); and
a ratio between respective movement lengths of the internal (2) and external (3) prisms is constant and set by distances between the fixed points (14, 15; 23, 24, 33, 34) and the additional rotating connexions (16, 17, 18, 19; 25, 26, 35, 36), so that the mobile system simultaneously produces a variation of the optical path length difference between the two optical routes and a self-apodization compensation of an interferogram resulting from the signal produced by the detector when the actuation system is activated.

2. Interferometer according to claim 1, in which the mirror (6) of the second optical route is constituted by a reflecting treatment (4₂) of an external face of the compensation assembly (5).

3. Interferometer according to claim 1 or 2, in which the two support arms (10, 11) are borne by the two levers (12, 13) of a single pair, so that said two support elements form, with said two levers, a deformable parallelogram; and for each lever (12, 13), the fixed point (14, 15) about which said lever is rotatably hinged is situated between the two additional rotating connexions (16-19) which respectively bear the two support arms for said lever.

4. Interferometer according to claim 1 or 2, in which each support element (10) is borne by the levers of a pair (21, 22) different from the pair of levers (31, 32) bearing the other support arm (11);
the actuation system (40-42) is connected to one of the levers (21, 32) of each pair so as to cause movements that are parallel but in the opposite directions at a same moment, for the two support arms (10, 11).

5. Interferometer according to any one of the preceding claims in which, in the second optical route, the compensation assembly (5) itself comprises an internal prism (2₂) and an external prism (3₂), that are additional to the internal (2₁) and external (3₁) prisms of the first optical route, with respective opposite faces that are parallel between the internal and external prisms of the second optical route, and the mirror (6) is borne by an external face (4₂) of the external prism of said second optical route; and
the internal (2₂) and external (3₂) prisms of the second optical route are connected to the mobile system, so that the length of the optical path of one of the optical routes increases at the same time as the length of the optical path of the other optical route reduces, when the actuation system (100-102 ; 40-42) is activated.

6. Interferometer according to claim 5, in which the respective external prisms (3₁, 3₂) of the two optical routes are fixed together on a same one (10) of the two support arms, and the respective internal prisms (2₁, 2₂) of the two optical routes are fixed together on the other one (11) of the two support arms.

7. Interferometer according to claim 6, in which the two optical routes are antisymmetric with respect to each other for respective orientations of the external prisms (3₁, 3₂) on the one hand, and for respective orientations of the internal prisms (2₁, 2₂) on the other hand.

8. Interferometer according to any one of the preceding claims, in which in each optical route, the internal (2₁, 2₂) and external (3₁, 3₂) prisms have apex angles that are identical, and are constituted by one and same transparent material.

9. Interferometer according to any one of the preceding claims, in which each rotating connexion is constituted by a flexural pivot.

10. Method for spectral analysis of a radiation originating from a portion of the Earth's surface, comprising the following steps:
- installing on board a satellite at least one optical and mechanical part of an interferometer according to any one of the preceding claims;
- orbiting the satellite around the Earth;
- orienting the satellite so that part of the radiation constitutes the initial beam (F₀);
- while the radiation part propagates in the two optical routes of the interferometer, activating the detector and the actuation system (100-102 ; 40-42) simultaneously; and
- calculating the Fourier transform of the signal produced by the detector, as a function of the parameter representing the difference in the length of the optical path between the two routes, in order to obtain a spectral distribution characteristic of the radiation.

11. Process according to claim 10, in which the calculation unit of the interferometer is situated on Earth, and the signals produced by the detector for variable values of the difference in the length of the optical path between the two routes are transcribed into a transmission format then transmitted from the satellite to the calculation unit.
